# DEMANDE DE BREVET EUROPEEN

(11) **EP 0 890 504 A1**
(43) Date de publication de la demande: **13.01.1999**
(21) Numéro de dépôt: 98450009.0
(22) Date de dépôt: 07.07.1998
(51) Int. Cl.: B62K 15/00, B62K 19/16, B62K 19/34

(54) **Cadre de vélo en matière plastique et/ou composite**

(30) Priorité: 08.07.1997 FR 9708907
(71) Demandeur: Mege, Jean, 33470 Gujan Mestras (FR)
(72) Inventeur: Mege, Jean, 33470 Gujan Mestras (FR)
(74) Mandataire: Thébault, Jean-Louis

(57) **Abrégé**

L'objet de l'invention est un cadre de vélo prévu pour recevoir un ensemble de direction (12), une roue arrière (16), une selle (18) et un pédalier (20), caractérisé en ce qu'il est réalisé en matière plastique et/ou composite, en au moins deux parties (22,24) obtenues de moulage, ayant une structure en caisson, liées par des moyens (26) de liaison, et dont le plan de jonction (25) est sensiblement perpendiculaire au plan du cadre.

## Description

La présente invention a pour objet un cadre de vélo en matière plastique et/ou composite, en au moins deux parties.

Un vélo comprend en général un cadre rigide, en tubes qui supporte tous les organes de la machine. Le cadre comprend à l'avant une fourche, actionnée en rotation par un guidon, qui soutient l'axe de la roue avant, à l'arrière des bras horizontaux dont les extrémités soutiennent l'axe de la roue arrière, en partie centrale inférieure un pédalier, et en partie centrale supérieure une tige réglable en hauteur sur laquelle est montée la selle.

Cet assemblage de tubes mécano-soudé est lourd lorsqu'il est en acier et nécessite pour la fabrication une main d'oeuvre importante et qualifiée ce qui entraîne un prix de revient relativement élevé.

Aussi, pour diminuer le poids des vélos de course, les tubes d'acier ont été remplacés par des tubes profilés en alliage léger qui améliorent aussi la pénétration dans l'air. Pour la compétition sur piste, certains coureurs utilisent même des cadres moulés en matériau composite, formés par deux coques symétriques par rapport au plan médian du cadre, dont la forme est minutieusement calculée afin d'obtenir pour un poids minimum, un cadre suffisamment rigide.

Ces cadres, exclusivement réservés pour la compétition, sont très chers car leur fabrication est quasi unitaire ou en très petite série et nécessite l'utilisation de matériaux spéciaux.

Dans le cas de fabrication en grande série pour les vélos classiques, le moulage d'un cadre monobloc en matière plastique n'est pas envisageable à cause de la complexité des outillages, et notamment des moules.

Par ailleurs, on constate qu'un vélo classique s'adapte difficilement à toutes les tailles d'individu. Ainsi, à chaque taille correspond une dimension de cadre, de roue et de manivelle. Ces différentes tailles constituent un autre problème à résoudre si on cherche à réaliser le cadre par moulage en grande série car elles multiplient le nombre d'outillages et donc le prix de revient.

La présente invention vise à pallier ces différents inconvénients en proposant un cadre en matière plastique, susceptible d'être fabriqué en grande série par moulage, l'agencement et les formes des différents éléments du cadre permettant de s'adapter à plusieurs tailles, en limitant toutefois le nombre et la complexité des outillages.

A cet effet, selon l'invention, le cadre de vélo prévu pour recevoir un ensemble de direction, une roue arrière, une selle et un pédalier, se caractérise en ce qu'il est réalisé en matière plastique et/ou composite, en au moins deux parties obtenues de moulage, ayant une structure en caisson, liées par des moyens de liaison, et dont le plan de jonction est sensiblement perpendiculaire au plan du cadre.

Dans un premier mode de réalisation, le plan de jonction des deux première et seconde parties est dans un plan sensiblement horizontal.

Dans ce cas, les moyens de liaison consistent en des formes conjuguées de deux parties prévues pour coopérer par emboîtement et des moyens de blocage qui immobilisent les deux éléments l'un par rapport à l'autre.

De plus, l'élément principal comprend des parties en saillie qui coopèrent avec des parties en creux de l'élément secondaire.

Selon une autre caractéristique, l'élément secondaire a une forme de garde-boue, obtenu directement de moulage, relié aux moyens de liaison avec la roue arrière de l'élément principal, et qui constitue ainsi les moyens de blocage.

Selon un autre mode de réalisation, le plan de jonction des deux première et seconde parties est sensiblement dans un plan vertical, situé entre l'ensemble de direction et le pédalier.

De façon préférentielle, les moyens de liaison comprennent, sur la seconde partie, une languette qui prend appui sur un axe solidaire de la première partie, un profilé qui s'emboîte dans la partie supérieure de la première partie, et des moyens de verrouillage interposés entre lesdites première et seconde parties.

Les moyens de verrouillage comprennent une genouillère, liée à la première partie, munie d'un ergot, qui peut pénétrer dans une lumière, ménagée dans les première et seconde parties.

Dans le cas où le cadre est équipé de commandes à câbles, il comprend un dispositif de transmission de commande entre les première et seconde parties.

Selon une autre caractéristique de l'invention, le support de pédalier est amovible.

D'autres caractéristiques et avantages ressortiront de la description qui va suivre d'un mode de réalisation particulier, non limitatif, et en regard des dessins annexés sur lesquels :
- Figure 1 est une vue en élévation latérale d'un vélo équipé d'un cadre en deux parties,
- Figure 2A est une vue en élévation latérale des deux parties du cadre avant montage,
- Figure 2B est une vue en perspective du raccordement des deux parties du cadre avant montage,
- Figure 2C est une coupe dans le plan du raccordement des deux parties du cadre après montage,
- Figure 3 est une vue latérale avec une coupe partielle du montage du support de direction,
- Figure 4A est une coupe transversale du dispositif de réglage de l'axe de pédalier,
- Figure 4B est une coupe suivant la ligne 4B-4B de la figure 4A du dispositif de réglage de l'axe de pédalier,
- Figure 5A est une coupe dans le plan du cadre du dispositif de réglage de hauteur de selle,
- Figure 5B est une vue de dessus du dispositif de réglage de hauteur de selle,
- Figure 6A est une vue de l'élément principal du cadre selon un second mode de réalisation en deux parties,
- Figure 6B est une vue du dispositif de fixation des deux parties de l'élément principal du cadre selon le second mode de réalisation, et
- Figure 6C est une vue du dispositif de transmission entre les deux parties de l'élément principal du cadre selon le deuxième mode de réalisation,

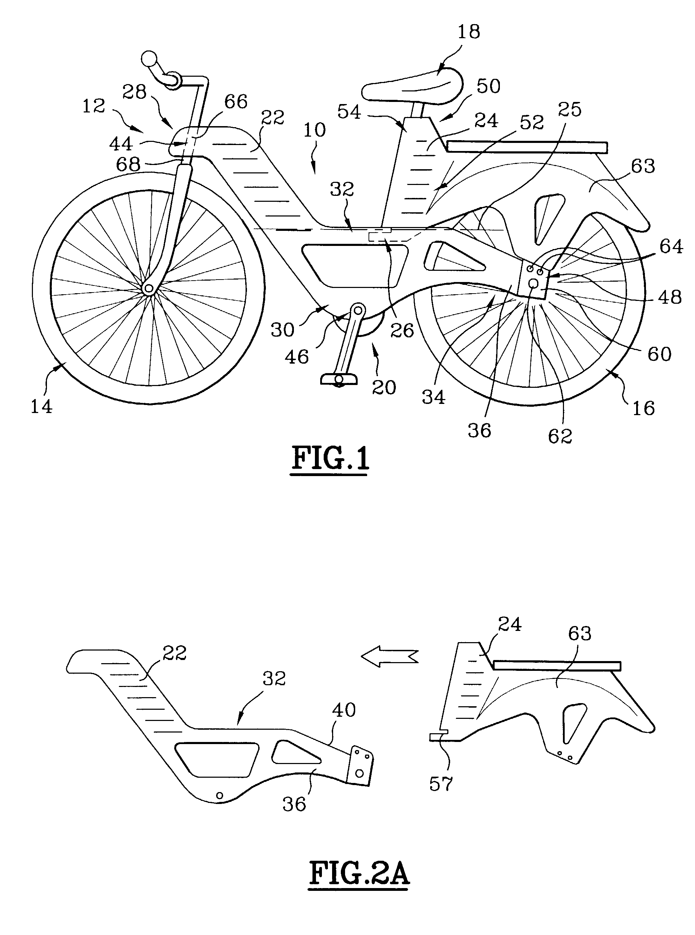

Sur la figure 1, on a représenté un vélo qui comprend un cadre 10, un ensemble de direction 12, une roue avant 14, une roue arrière 16, une selle 18 et un pédalier 20.

Le cadre 10 comprend deux éléments, l'un dit principal 22 et, l'autre dit secondaire 24, en matière plastique et/ou composite, moulés par injection, dont le plan de jonction 25 est sensiblement perpendiculaire au plan du cadre, et qui sont reliés entre eux par des moyens de liaison 26.

L'élément principal 22, qui remplace la partie avant et inférieure d'un cadre de l'art antérieur, comprend quatre zones fonctionnelles :
- une zone avant supérieure 28 où sont placés des moyens de liaison 44 avec l'ensemble de direction 12,
- une zone centrale inférieure 30, ayant un profil en forme de 'U' renversé, où sont placés des moyens de liaison 46 avec le pédalier 20,
- une zone centrale supérieure 32, ayant un profil tubulaire de section rectangulaire, où sont placés les moyens de liaison 26 avec l'élément secondaire 24 du cadre,
- une zone arrière 34, qui se scinde en deux bras 36 et 40 (voir figure 2A), où sont placés des moyens de liaison 48 avec la roue arrière 16.

L'élément secondaire 24, qui remplace la partie centrale supérieure d'un cadre classique, comprend deux zones fonctionnelles.

Une zone supérieure 50 et une zone inférieure 52, où sont placés respectivement des moyens de liaisons 54 avec la selle 18, et les moyens de liaison 26 avec l'élément principal 22 du cadre.

Le cadre est ainsi réalisé en deux parties afin de simplifier l'outillage et d'obtenir des pièces facilement moulables, sans contre dépouille.

De plus, les formes en caisson permettent de donner à l'ensemble ainsi formé une grande rigidité.

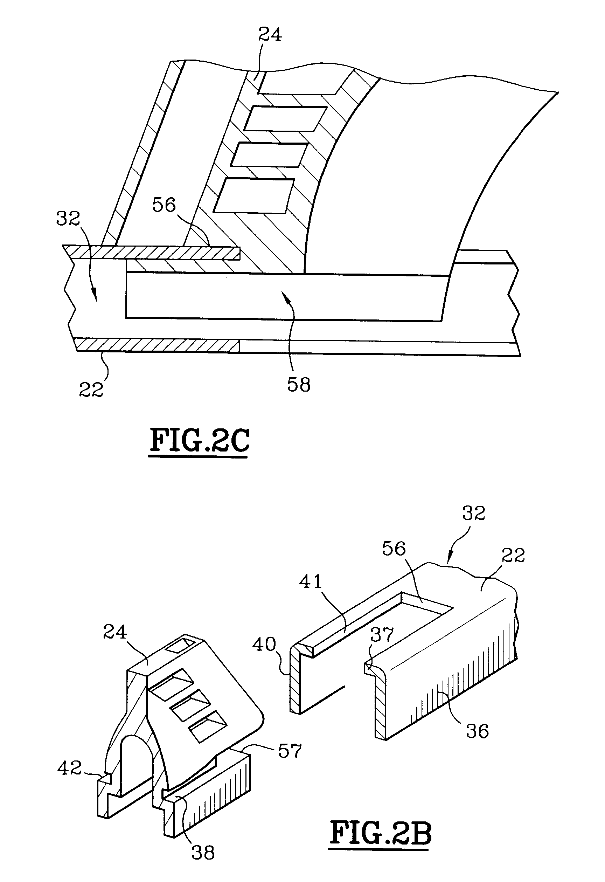

Les moyens de liaison 26 sont réalisés grâce aux profils conjugués des deux éléments, représentés sur les figures 2A, 2B et 2C, qui permettent d'emboîter l'élément secondaire 24 dans l'élément principal 22.

Dans sa partie arrière, l'élément principal 22 se scinde en deux bras 36 et 40 avec chacun dans leur partie supérieure, une aile 37 et 41 en saillie. De plus, la zone centrale supérieure 32 comprend une extrémité 56 qui débouche entre les bras 36 et 40.

En regard, l'élément secondaire 24 possède deux rainures 38 et 42 dans lesquelles sont susceptibles de coulisser les ailes 37 et 41 en saillie, et une autre rainure 57 prévue pour recevoir l'extrémité 56.

Grâce à cet agencement, au montage, l'élément secondaire 24 est introduit par l'arrière et coulisse dans l'élément principal 22 jusqu'à ce que l'extrémité 56 entre en contact avec l'élément secondaire 24. Des moyens de blocage 58, par exemple à clip empêche alors toute translation. Le cadre ainsi obtenu est parfaitement rigide. Ces moyens de blocage 58 peuvent être aussi réalisés à partir d'empreintes dans l'élément principal 22 dans lesquelles viennent se loger des ergots placés sur l'élément secondaire 24 non représentés sur les dessins.

Le cadre ainsi formé possède différentes zones fonctionnelles auxquelles sont liés les organes de la machine, guidon, pédalier, roues notamment.

Les moyens de liaison 48 avec la roue arrière 16, comprennent des inserts 60, rajoutés à chaque extrémité des bras 36 et 40, qui soutiennent l'axe 62 de la roue arrière 16.

Selon le mode de réalisation représenté sur la figure 1, grâce à une forme 63 adaptée au profil de la roue, l'élément secondaire 24 est fixé, par l'intermédiaire de vis 64, aux deux inserts 60. Cet agencement permet d'immobiliser en translation l'élément secondaire 24 par rapport à l'élément principal 22 et constitue un autre mode de réalisation des moyens de blocage 58 précédemment décrits ou vient en complément de ces moyens de blocage.

De façon connue, les moyens de liaison 44 entre l'ensemble de direction 12 et l'élément principal 22 du cadre comprennent un alésage 66, légèrement incliné dans le plan du cadre, dans lequel vient se loger un axe, appelé axe de fourche 68, monté pivotant fixe et en translation.

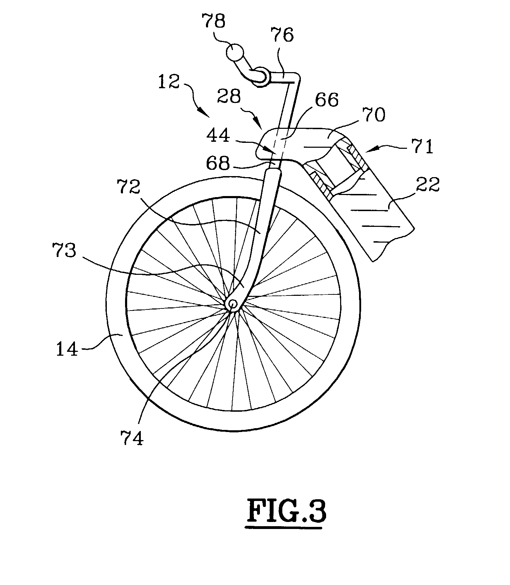

Selon un autre mode de réalisation représenté sur la figure 3, les moyens de liaison 44 comprennent un support de direction 70, intercalé entre l'élément principal 22 et l'ensemble de direction 12. Ce support de direction 70, dans lequel est réalisé l'alésage 66, est lié, par des moyens de liaison 71, à l'élément 22 dans la zone avant 28. Ces moyens de liaison 71 sont réalisés, de façon préférentielle, par emboîtement, grâce au profil en creux de l'élément 22 qui coopère avec l'extrémité du support de direction 70, le blocage étant assuré par tout moyen approprié, comme le collage par exemple.

Ce montage a deux principaux avantages. D'une part, il permet de simplifier les formes de l'élément principal 22 et donc celles de son moule. D'autre part, il permet, sans changer l'élément principal 22 qui constitue la pièce la plus complexe du cadre, d'adapter la dimension du cadre aux différentes tailles des utilisateurs.

L'ensemble de direction 12 comprend dans les deux cas, en plus de l'axe de fourche 68, une fourche avant 72, dont les extrémités inférieures 73 soutiennent l'axe 74 de la roue avant 14, une potence 76 et un guidon 78.

Les moyens de liaison 46 avec le pédalier 20 comprennent de façon connue, un alésage, réalisé dans la zone centrale inférieure 30, d'axe horizontal perpendiculaire au plan du cadre, dans lequel vient se loger un axe du pédalier monté pivotant et fixe en translation.

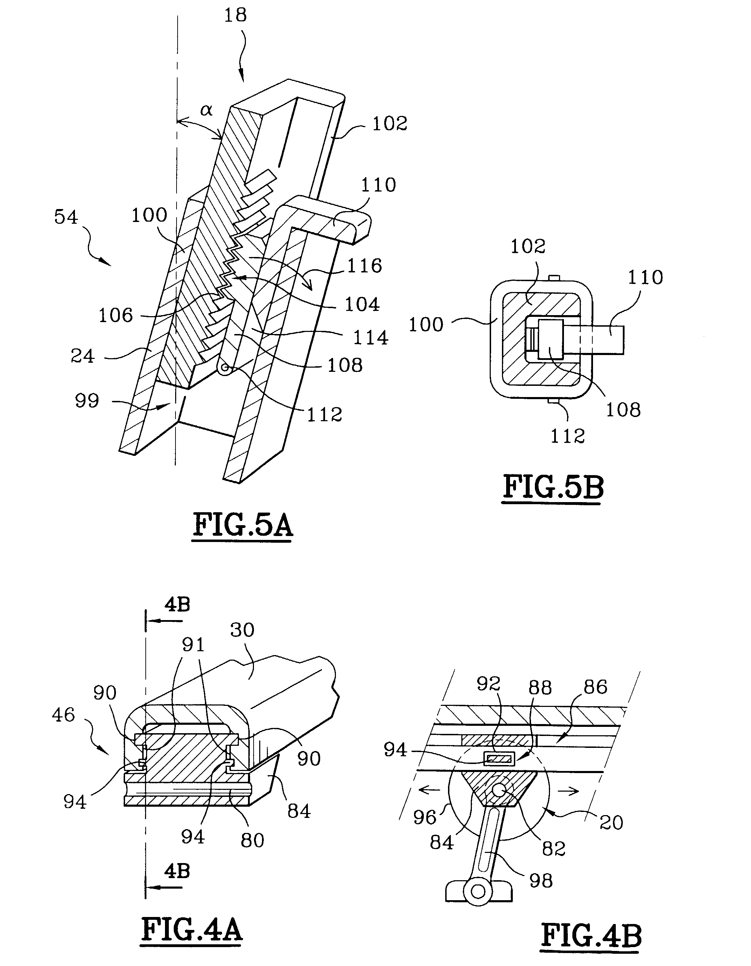

Selon un mode préférentiel de réalisation représenté sur les figures 4A et 4B, les moyens de liaison 46 comprennent un support d'axe 84 intercalé entre l'élément principal 22 et le pédalier 20. Ce support d'axe 84, dans lequel est réalisé l'alésage 80, peut se translater dans une glissière 86, des moyens de blocage 88 permettant de l'immobiliser en translation. La glissière 86 est réalisée grâce à des profils conjugués des pièces 84 et de la partie centrale inférieure 30, visible sur la figure 4A. Ainsi, le support d'axe 84 en forme de 'T' vient coulisser dans deux rainures 90 réalisées dans les flancs intérieurs 91 du profil en 'U' de la partie centrale inférieure 30. Les moyens de blocage 88 peuvent être réalisés à partir d'empreintes 92 dans les flancs 91 du profil en 'U' dans lesquelles viennent se loger des ergots 94 du support d'axe 84.

Dans ce mode de réalisation également, le pédalier 20 comprend, en plus de son axe 82, au moins un plateau 96 et deux manivelles 98.

Un tel dispositif a deux principaux avantages. D'une part il permet sans changer l'élément principal 22, qui constitue la pièce la plus complexe du cadre, d'adapter la garde au sol du cadre à la dimension des manivelles. D'autre part, il simplifie les formes de l'élément principal 22 et donc celles de son moule.

De façon connue, les moyens de liaison 54 avec la selle 18 peuvent être réalisés sous forme d'un trou dans l'élément secondaire 24, dans lequel vient coulisser une tige à l'extrémité de laquelle est fixée la selle proprement dite. Cette tige est immobilisée en translation par serrage, l'extrémité du trou étant déformée par tout moyen approprié, tel qu'un collier par exemple.

Un autre mode de réalisation, des moyens de liaison 54, propre à l'invention, est représenté sur les figures 5A et 5B.

Ces moyens de liaison 54 comprennent une glissière 99, réalisée par un tube 100 de section rectangulaire lié à l'élément secondaire 24, dans lequel vient coulisser une tige 102 de section en forme de 'U'. L'extrémité débouchante de cette tige reçoit la selle 18 proprement dite.

Le tube 100 est obtenu de moulage avec l'élément secondaire 24, et incliné d'un angle α par rapport à la verticale.

La tige 102 peut coulisser dans le tube 100 afin d'adapter la dimension du cadre à la taille de l'utilisateur. Une fois réglé, le tube est immobilisé en translation par des moyens de blocage 104.

Ces moyens de blocage 104 comprennent une crémaillère 106 venue de fabrication avec la tige 102 et une crémaillère 108, liée à l'élément secondaire 24 et à profil de dents conjugué avec celle de la crémaillère 106.

Ces moyens de blocage comprennent en outre une pièce 110 en forme de coin, prévue pour être introduite entre la face lisse 114 de la crémaillère 108, montée pivotante autour d'un axe 112 lié à l'élément secondaire 24 et le tube 100, en sorte de pouvoir plaquer les deux crémaillères l'une contre l'autre.

Pour régler la hauteur de la selle, il suffit d'enlever la pièce 110. Ainsi en tirant sur la tige de selle, la crémaillère 108 pivote légèrement, suivant la flèche 116, et libère les crans de la crémaillère 106. L'inclinaison du tube d'un angle α permet à la crémaillère 108 de rester en arrière sous l'effet de son propre poids.

Une fois la hauteur réglée, il suffit d'introduire la pièce 110 entre la face lisse 114 de la crémaillère 108 et le tube 100 afin d'immobiliser en translation la tige 102 de la selle. A cet effet, les pièces 108 et 110 sont biseautées afin de faciliter cette opération.

On constate que ce cadre de vélo, muni d'un support de direction, d'un support de pédalier, peut s'adapter à plusieurs dimensions, sans modifier celles de l'élément principal 22.

En effet, les dimensions du cadre, qui sont susceptibles de changer selon la taille de l'utilisateur, sont la longueur des bras 36 et 40 qui détermine le passage des roues, la hauteur de l'axe de pédalier qui détermine la garde au sol, la hauteur de selle et la position de l'axe de fourche par rapport à la selle et au pédalier.

Aussi, la longueur des bras est modifiée en changeant la dimension des inserts 60, la garde au sol en changeant la position de l'axe 80 dans le support de pédalier 84, la hauteur de selle en translatant la tige 102 et la position de l'axe de fourche en changeant les dimensions du support de direction.

Dans tous les cas, les dimensions de l'élément principal 22 restent inchangées.

En complément, l'inclinaison de l'élément secondaire 24 d'un angle α permet d'adapter aisément la dimension du cadre à la taille de l'utilisateur. Ainsi, en modifiant la hauteur de selle, non seulement on modifie la distance entre le pédalier et la selle, mais également celle entre la selle et la potence.

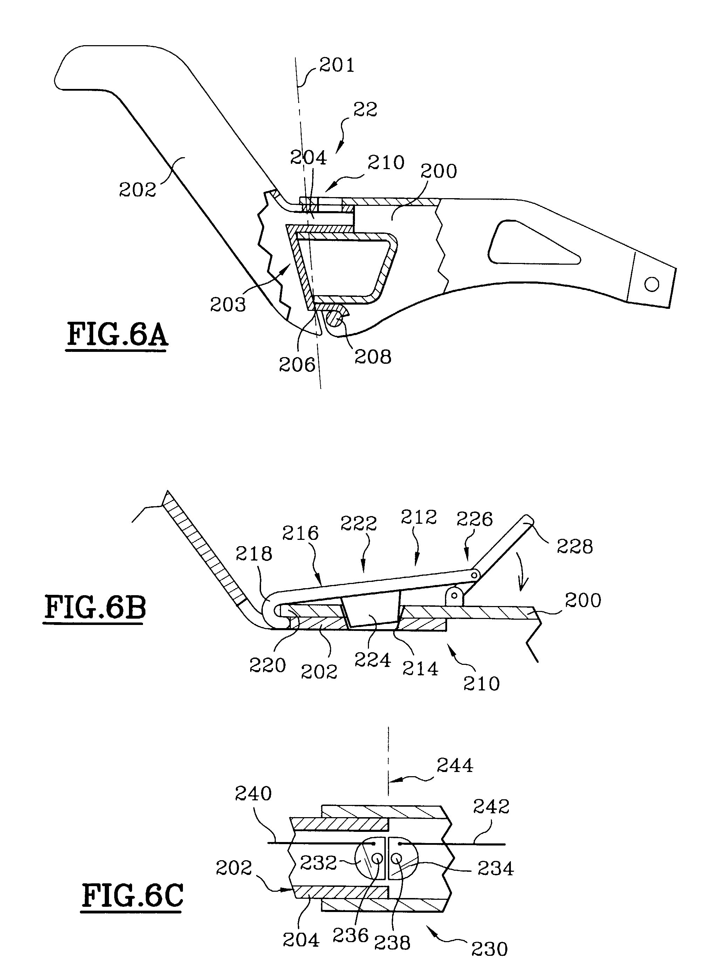

Dans un autre mode de réalisation particulièrement attractif, l'élément principal 22 de ce vélo en matière plastique et/ou composite comprend deux parties arrière 200 et avant 202, liées par des moyens de liaison 203, tel représenté sur la figure 6A. Le plan 201 de jonction étant sensiblement dans un plan vertical et perpendiculaire au plan du cadre.

Dans ce cas, la partie avant 202 est munie de moyens de liaison avec un ensemble de guidage tel que 12, alors que la partie arrière 200 est munie de moyens de liaison avec une roue arrière tel que 16, avec le pédalier tel que 18 et avec l'élément tel que 24.

Les moyens de liaison 203 comprennent sur la partie avant 202 un profilé horizontal de section sensiblement rectangulaire 204, susceptible de s'emboîter dans la partie supérieure creuse de l'élément 200, et une languette 206 dans sa partie basse qui est susceptible de venir en appui sur un axe 208 réalisé dans la partie basse de l'élément 200.

Pour assembler les deux parties, on vient mettre en appui la languette 206 au-dessus de l'axe 208 et on fait pivoter la partie avant 202 jusqu'à ce que le profilé 204 s'emboîte dans l'élément 200. Les deux parties 200 et 202 sont ensuite immobilisées grâce à un dispositif de verrouillage 210.

Ce dispositif de verrouillage 210, représenté sur la figure 6B, comprend une genouillère 212 fixée sur la partie supérieure de l'élément 200 et une lumière 214 réalisée dans la partie commune aux deux pièces 200 et 202.

Pour pouvoir immobiliser l'ensemble 200 et 202, la genouillère 212 comprend à une extrémité 216 un crochet 218 qui peut s'accrocher à l'extrémité 220 de la pièce 200, dans sa partie centrale inférieure 222 un ergot 224 dont la forme correspond à celle de la lumière 214 et susceptible de s'emboîter dans ladite lumière, et à l'autre extrémité 226 un levier de verrouillage 228.

Ainsi après avoir emboîté les pièces, pour verrouiller, le crochet 218 est accroché à l'extrémité 220 de l'élément 200, le levier de verrouillage 228 étant initialement relevé. Ensuite, on fait pivoter ce levier de verrouillage 228 dans le sens horaire jusqu'à la position horizontale, l'ergot 224 pénètre dans la lumière 214 et immobilise en translation les pièces 200 et 202.

Le principal avantage de ce dispositif est de ne pas soumettre la structure en matière plastique et/ou composite à une contrainte, compression ou traction, permanente. En effet, c'est l'ergot qui assure le blocage et non la genouillère qui subit tous les efforts.

Afin de rendre les deux parties totalement indépendantes, on ajoute à la jonction des deux éléments, un dispositif 230 de transmission de commande.

Ce dispositif, représenté sur la figure 6C, a pour rôle d'assurer la continuité des commandes, notamment de frein ou de changement de vitesses, entre les deux éléments 200 et 202, un câble métallique assurant, dans les deux cas, la liaison entre l'organe de commande et l'organe de manoeuvre.

Selon un mode de réalisation, ce dispositif de transmission de commande 230 comprend deux demi-disques 232 et 234, pouvant pivoter dans le plan du cadre respectivement autour d'un axe 236 lié à l'élément 202 et autour d'un axe 238 lié à l'élément 200 et deux extrémités des câbles 240 et 242 de commande.

Ces deux demi-disques 232 et 234 sont incorporés dans la partie creuse formée par le profilé 204 et la partie supérieure de l'élément 200, leurs parties plates étant juxtaposées de part et d'autre du plan extrémité 244 du profilé 204, de telle sorte que la rotation d'un des deux demi-disques entraîne la rotation de l'autre.

De façon symétrique, les extrémités des câbles 240 et 242 sont reliées respectivement aux demi-disques 232 et 234 en un point éloigné de l'axe et proche du plan extrémité 244 du profilé 204.

Ainsi, en agissant par exemple sur la commande de frein, on exerce une traction sur l'extrémité du câble 240 qui entraîne en rotation le demi-disque 232. Ce dernier fait pivoter le demi-disque 234 qui exerce une traction sur l'extrémité du câble 242 qui agit sur la fermeture de frein.

Ce dispositif est valable pour une commande, aussi on ajoute autant de couples de demi-disques sur les axes que de commande à transmettre.

Ce cadre est décrit avec les différentes liaisons aux principaux organes fonctionnels d'un vélo. D'autres équipements, garde-boue, porte-bagages peuvent être rattachés au cadre qui vient d'être décrit, ou obtenus directement de moulage, ces éléments étant directement incorporés aux deux parties du cadre 22 et 24. D'autres éléments peuvent être ménagés dans les formes en caisson du cadre, tel que des petits coffres de rangements.

## Revendications

1. Cadre de vélo prévu pour recevoir un ensemble de direction (12), une roue arrière (16), une selle (18) et un pédalier (20), caractérisé en ce qu'il est réalisé en matière plastique et/ou composite, en au moins deux parties (22,24 ; 200,202) obtenues de moulage, ayant une structure en caisson, liées par des moyens (58, 203) de liaison, et dont le plan de jonction (25, 201) est sensiblement perpendiculaire au plan du cadre.

2. Cadre de vélo, selon la revendication 1, caractérisé en ce que le plan de jonction (25) des deux première (22) et seconde (24) parties est dans un plan sensiblement horizontal.

3. Cadre de vélo, selon les revendications 1 et 2, caractérisé en ce que les moyens de liaison (26) consistent en des formes conjuguées de deux parties (22) et (24) prévues pour coopérer par emboîtement et des moyens de blocage (58) qui immobilisent les deux éléments(22) et (24) l'un par rapport à l'autre.

4. Cadre de vélo selon la revendication 3, caractérisé en ce que l'élément principal (22) comprend des parties en saillie (36, 41, 56) qui coopèrent avec des parties en creux (37, 42, 57) de l'élément secondaire (24).

5. Cadre de vélo selon les revendications 3 ou 4, caractérisé en ce que l'élément secondaire (24) a une forme de garde-boue (63), obtenu directement de moulage, relié aux moyens de liaison avec la roue arrière de l'élément principal (22), et qui constitue ainsi les moyens de blocage (58).

6. Cadre de vélo selon la revendication 1, caractérisé en ce que le plan de jonction (201) des deux première (200) et seconde (202) parties est sensiblement dans un plan vertical, situé entre l'ensemble de direction (12) et le pédalier (20).

7. Cadre de vélo selon la revendication 1 ou 6, caractérisé en ce que les moyens de liaison (203) comprennent, sur la seconde partie (202), une languette (206) qui prend appui sur un axe (208) solidaire de la première partie (200), un profilé (204) qui s'emboîte dans la partie supérieure de la première partie (200), et des moyens de verrouillage (210) interposés entre lesdites première et seconde parties.

8. Cadre de vélo, selon la revendication 7, caractérisé en ce que les moyens de verrouillage (210) comprennent une genouillère (212), liée à la première partie (200), munie d'un ergot (224), qui peut pénétrer dans une lumière (214), ménagée dans les première et seconde parties.

9. Cadre de vélo selon l'une des revendications 6 à 8, équipé des commandes à câbles, caractérisé en ce qu'il comprend un dispositif (230) de transmission de commande entre les première (200) et seconde (202) parties.

10. Cadre de vélo, selon une quelconque des revendications précédentes, caractérisé en ce que le support (84) de pédalier est amovible.
